# EUROPEAN PATENT APPLICATION

(11) **EP 1 712 971 A2**
(43) Date of publication of application: **18.10.2006**
(21) Application number: 06007120.6
(22) Date of filing: 04.04.2006
(51) Int. Cl.: G05D 1/02

(54) **Guided vehicle system**

(30) Priority: 11.04.2005 JP 2005113616
(71) Applicant: MURATA KIKAI KABUSHIKI KAISHA, Minami-ku Kyoto-shi Kyoto 601 (JP)
(72) Inventor: Shimamura, Kazunori, Kani-shi Gifu, 5090206 (JP)
(74) Representative: Liedl, Christine

(57) **Abstract**

A guided vehicle system including guided vehicles (20) having:
an RF tag (22);
an RF tag writer (42) for writing position information of the guided vehicle in the RF tag;
an RF tag reader (24) for reading at least one of an RF tag provided in a leading guided vehicle and an RF tag provided along a travel route; and
control means for controlling travel of the guided vehicle and for avoiding a collision with the leading guided vehicle based on information read from the RF tag.

## Description

### Technical Field

The present invention relates to a system including overhead traveling vehicles, rail vehicles, and automatic guided vehicles that travel on the ground where no rail is provided. In particular, the present invention relates to communication between guided vehicles.

### Background Art

In the system including guided vehicles such as overhead traveling vehicles, rail vehicles, and automatic guided vehicles, the guided vehicle has a beam sensor for detecting a leading guided vehicle to prevent rear-end collision. However, since the beam sensor is a sensor having a high directivity, rear-end collision cannot be prevented satisfactorily in branch sections, merging sections, or curve zones. In this regard, in Japanese Patent No. 3212029, a guided vehicle controller blocks the guided vehicles from entering branch sections, merging zones, curve zones, or blind alley zones such that the number of guided vehicles that enter one zone at the same time is limited to one.

However, in the above control, the guided vehicles pass through the zone one by one under control of the guided vehicle controller. Therefore, the burden on the guided vehicle controller is large, and communication traffic is heavy. Further, in order to prevent deadlocks, complicated control is required. The inventor considered that it is possible to solve the problems by implementing autonomous distributed control for traveling in the branch sections, the merging sections, or the like, and arrived at the present invention. In the autonomous distributed control, without any controller, direct local communication between the guided vehicles can be achieved.

### Summary of the Invention

A primary object of the present invention is to provide novel structure for prevention of collision between guided vehicles.

A secondary object of the present invention is to make it possible to reliably prevent collision between guided vehicles.

A secondary object of the present invention is to autonomously determine whether a guided vehicle can enter a merging section or not.

A secondary object of the present invention is to make it possible to further reliably prevent collision between guided vehicles.

A secondary object of the present invention is to allow a guided vehicle to autonomously update information of an RF tag.

According to the present invention, a guided vehicle system includes guided vehicles. A guided vehicle having: an RF tag reader reading at least one of an RF tag provided in a leading guided vehicle and an RF tag provided along a travel route; and control means for controlling travel of the guided vehicle for avoiding a collision between the guided vehicle and the leading guided vehicle based on information read from the RF tag.

It is preferable that each of the guided vehicles has an RF tag, and the RF tag reader reads the RF tag provided in the leading guided vehicle.

Further, it is preferable that the RF tag provided along the travel route is provided in a merging section of the travel route for writing information about whether the guided vehicle can enter the merging section in the RF tag, and the guided vehicle reads the RF tag provided in a merging section of the travel route with the RF tag reader before entering the merging section to determine whether the guided vehicle can enter the merging section.

It is preferable that each of the guided vehicles has an RF tag writer, the guided vehicle writes position information of the guided vehicle in RF tag of the guided vehicle with the RF tag writer, and the guided vehicle reads the RF tag of the leading guided vehicle with the RF tag reader to avoid the collision with the control means.

It is particularly preferable that each of the guided vehicles has a map storing a traveling route. The tag writer may write position information on the traveling route as the position information, and the control means may refer to the map for avoiding the collision.

It is preferable that each of the guided vehicles has an RF tag writer, and a blocking signal for blocking the merging section against the other guided vehicles is written in the RF tag provided at the merging section with the RF tag writer.

Further, it is preferable that the system further includes releasing means for releasing the blocking signal in the RF tag provided in the merging section after a pass of the guided vehicle through the merging section.

In particular, it is preferable that each of the guided vehicles has the releasing means.

Alternatively, each of the guided vehicles may have requesting means for requesting the release to the releasing means.

In the present invention, the guided vehicle has the RF tag reader for reading the RF tag of the leading guided vehicle or the RF tag provided along the travel route. Unlike the case of using a beam sensor or the like, in the case of using the RF tag and the RF tag reader, the shape of the obstacle is not detected. Therefore, the processing apparatus or the like is not recognized mistakenly as the leading guided vehicle. Further, by reading the RF tag without using the guided vehicle controller, the guided vehicle can autonomously avoid collision.

In the case where each of the guided vehicles has the RF tag, the following guided vehicle can avoid collision with the leading guided vehicle by reading the RF tag of the leading guided vehicle. In particular, since the readable angular range of the RF tag is wide, it is possible to prevent collision in the curve zone reliably. Further, prevention of collision is achieved without any controller. Further, in the branch section, regardless of whether the leading guided vehicle goes straight through the branch section, or goes into the branch route from the branch section, since the RF tag can be read by the following guided vehicle, collision in the branch section can be prevented autonomously. Therefore, for example, the controller does not have to implement blocking control in the branch section. If the RF tag is provided in the merging section, and data indicating whether the guided vehicle can enter the merging section or not is written in the RF tag, the guided vehicle can automatically determine whether it is possible to enter the merging section without communication with the controller.

Each of the guided vehicles has the RF tag and the RF tag writer for writing its position information in the RF tag, and updating the RF tag periodically, for example. The following guided vehicle can avoid collision by reading the RF tag of the leading guided vehicle.

In particular, each of the guided vehicles has a map for storing traveling routes, and writes its position information on the traveling route of the RF tag. The following guided vehicle refers to the map, and determines whether the leading guided vehicle is on the same traveling route. If the following guided vehicle determines that the leading guided vehicle is on the same traveling route, it is possible to recognize the distance to the leading guided vehicle. Thus, it is possible to further reliably avoid collision. In the case where the traveling route is divided by a plurality of points, for example, the position information on the traveling route can be given by the previous point and the traveling distance from the point. In the case where the position information is represented by a plurality of sides connecting traveling routes, the position information can be given by the side on which the guided vehicle is currently traveling, and the traveling distance from the starting point of the side.

If the guided vehicle has the RF tag writer, the guided vehicle can update the data of the RF tag. For example, in the case where the RF tag is provided along the traveling route, the guided vehicle can update the information of the RF tag along the traveling route. In particular, in the case where the RF tag is provided at the merging section, at the time the guided vehicle enters the merging section, by writing information indicating that the merging section is occupied in the RF tag, it is possible to prevent entry of the following guided vehicle into the merging section. When the guided vehicle passes the merging section, the occupied state is released by the RF tag writer provided in the guided vehicle, for example. The RF tag writer used for the release of the occupied state may be the same as the RF tag writer used for writing the information of occupancy, and may be different from the RF tag writer used for writing the information of occupancy. Alternatively, release means may be provided separately from the guided vehicle. In this case, the guided vehicle may request the releasing means to release the occupied state.

Further, in the case where the guided vehicle has the RF tag, the guided vehicle can write its position in the RF tag such that the position information can be read by the following guided vehicle.

### Brief Description of the Drawings

FIG. 1 is a plan view schematically showing the layout of a guided vehicle system according to an embodiment.
FIG. 2 is a block diagram showing a control system of a guided vehicle used in the embodiment.
FIG. 3 is a flowchart showing a collision avoidance algorithm according to the embodiment.

### Brief Description of the Symbols

- 2: Guided vehicle system
- 4: Main route
- 6: Intra-bay route
- 10, 12: Branch section
- 11, 13: Merging section
- 20: Guided vehicle
- 22: RF tag
- 24: RF tag reader
- 30: RF tag
- 31: Writing unit
- 34: Travel control unit
- 40: Map
- 42: Writer

### EMBODIMENT

Hereinafter, an embodiment in the most preferred form for carrying out the present invention will be described.

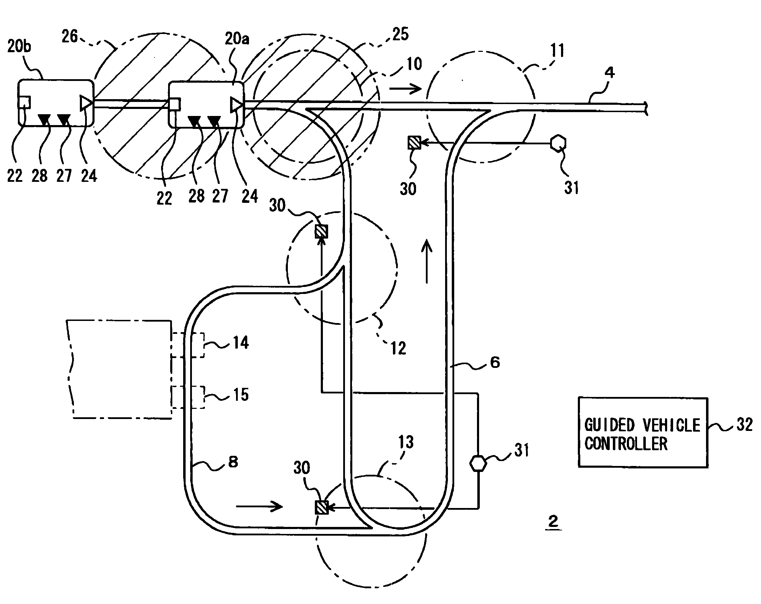

The embodiment will be described with reference to FIGS. 1 to 3. In FIG. 1, a reference numeral 2 denotes a guided vehicle system, a reference numeral 4 denotes a main route of, e.g., an inter-bay, a reference numeral 6 denotes an intra-bay route, and a reference numeral 8 denotes a specific zone. For example, the number of guided vehicles 20 staying in one specific zone 8 is limited to one. Further, merging sections and blind alley zones are also regarded as specific zones. Reference numeral 10, 12 denote branch sections. Reference numerals 11, 13 denote merging sections. For example, the specific zone 8 is a zone between the branch section 12 and the merging section 13. The merging sections 11, 13 are also regarded as specific zones. Reference numerals 14, 15 denote load ports provided in the specific zone 8. Reference numerals 20a, 20b denote leading and following guided vehicles.

It should be noted that any type of guided vehicles can be used. In the embodiment, the guided vehicles are overhead traveling vehicles. Each of the routes 4, 6, and the specific zone 8 comprises a traveling rail provided along a ceiling of a clean room. For example, an RF tag 22 is provided on the back side of the guided vehicle 20, and an RF tag reader 24 is provided on the front side of the guided vehicle 20. Though it is sufficient that the RF tag reader 24 can at least read data of the RF tag 22, in the embodiment, it is assumed that the RF tag reader 24 is an RF tag reader/writer, capable of reading data from, and writing data in the RF tag 22. Further, the RF tags 22 may be provided, e.g., on both front and back sides of the guided vehicles 20a, 20b, instead of only the back side of the guided vehicles 20a, 20b. In the case where the RF tags 22 are provided on both front and back sides of the guided vehicles 20a, 20b, the RF tag readers 24 may also be provided on both front and back sides of the guided vehicles 20a, 20b. Electricity is supplied to the RF tag wirelessly, and data can be read from or written in the RF tag. The data can be read from or written in the RF tag easily, and the directivity of the RF tag at the time of reading/writing is low.

The RF tag reader 24 has a reading range as indicated by reference numerals 25, 26 in FIG. 1. When the leading guided vehicle 20a is present in a range where collision possibly occurs, regardless of whether the leading guided vehicle 20a is in a straight zone or a branch zone, it is possible to read the RF tag 22 of the leading guided vehicle 20a. For example, in the branch sections 10, 12, regardless of whether the leading guided vehicle 20a travels straight, or travels into the branch route, the RF tag 22 of the leading guided vehicle 20a can be read by the following guided vehicle 20b. The directivity and the communication rage at the time of reading the RF tag 22 by the RF tag reader 24 can be adjusted arbitrarily, e.g., by the antenna structure or the RF output. Position data of the guided vehicles 20a, 20b is written in the RF tags 22 at predetermined time intervals. The following guided vehicle reads the position data of the leading guided vehicle, and determines the distance between the vehicles for collision avoidance. Alternatively, the position data may not be written in the RF tags 22. In this case, the area where the RF tag 22 is readable by the RF tag reader 24 is regarded as the area that needs avoidance of possible collision. If there is any leading guided vehicle ahead of the following guided vehicle, the following guided vehicle should be stopped or decelerated unexceptionally.

Each of the guided vehicles 20a, 20b is provided with a dog sensor 27 for reading dogs (not shown) provided along the main route 4 or the intra-bay route 6. Based on the read position of the dog, the current position is determined. In the area between dogs, the current position is determined based on values of encoders provided in the travel control system for the guided vehicles. The position data of the RF tags 22 is updated at predetermined time intervals of, for example, 10 milliseconds to 1 second. Reference numerals 28 denote communication interfaces used for communication between the guided vehicles, or between the guided vehicle and a guided vehicle controller 32.

At the merging sections 11, 13, in some cases, collision avoidance cannot be performed suitably by reading the RF tag provided at the back of the leading guided vehicle. For example, when two guided vehicles enter the merging section, if these guided vehicles are almost in parallel with each other, the front surfaces of the guided vehicles may collide with each other undesirably. Therefore, on the entrance side of the merging sections 11, 13, RF tags 30 are fixedly provided on the ground. Before the guided vehicle enters the merging section, the RF tag reader 24 reads the RF tag 30. If the data written in the RF tag 30 indicates that the merging section is occupied, the guided vehicle does not enter the merging section. If the data written in the RF tag 30 indicates that the merging section is not occupied, the guided vehicle writes the data indicating that the merging section will be occupied in the RF tag 30 using the RF tag reader 24 which can also be used as the RF tag writer. Then, the guided vehicle enters the merging section. After the guided vehicle passes the merging section 11 or 13, the guided vehicle writes data indicating that occupancy of the merging section is finished, in the RF tag 30 through a suitable writing unit 31. If the guided vehicle can write the data in the RF tag 30 on the back side using the RF tag reader 24 which also functions as the RF tag writer, or using another RF tag writer, the writing unit 31 may not be provided.

The similar control is implemented for the specific zone 8. For example, the RF tag 30 is provided at the branch section 12 on the entrance side of the specific zone 8. Before entering the specific zone 8, the guided vehicle checks where the specific zone 8 is occupied by the leading guided vehicle. If the specific zone is not occupied, the guided vehicle writes the data indicating that the specific zone will be occupied in the RF tag 30, and then, enters the specific zone 8. At the time of leaving the specific zone 8, the guided vehicle writes the data to this effect, i.e., delete the data indicating occupancy in the RF tag 30 through the writing unit 31.

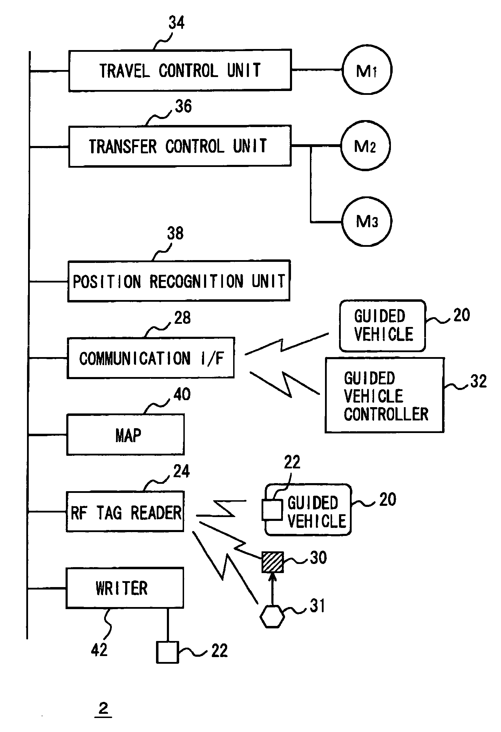

FIG. 2 shows a control system of a guided vehicle 20. A travel control unit 34 implements travel control for a servo motor M1. In particular, by the control based on information of the RF tag reader 24, collision is avoided. A transfer control unit 36 drives a servo motor M2 for elevating/lowering control of a hoisting frame (not shown), and drives a servo motor M3 for chucking/releasing the article, or lateral feeding. A position recognition unit 38 recognizes the current position at predetermined time intervals using a signal from the dog sensor and the traveling distance of the servo motor M1. A communication interface 28 communicates with other guided vehicles or the guided vehicle controller 32. A map 40 stores a map indicating traveling routes, and the traveling distances between respective points.

The RF tag reader 24 reads the RF tag of the leading guided vehicle. In particular, the RF tag reader 24 reads the position data of the leading guided vehicle for collision avoidance. The position data of the RF tag indicates an ID of a point (physically corresponding to the dog) in the traveling route on the map 40, and the distance from the point. Thus, when the following guided vehicle reads the RF tag of the leading guided vehicle, it is possible to determine on which traveling route the leading guided vehicle is traveling, and determine the position of the leading guided vehicle on the traveling route. If the leading guided vehicle and the following guided vehicle are on different routes, no collision will occur. Even if the leading guided vehicle and the following guided vehicle are on the same route, since the distance between the vehicles can be determined, based on the information, it is possible to avoid collision.

When the guided vehicle enters the merging section 11 or 13, or enters the specific zone 8, the guided vehicle checks whether the data indicating occupancy is written in the RF tag 30 or not. If the merging section 11 or 13, or the specific zone 8 is not occupied, the guided vehicle writes data indicating occupancy in the RF tag 30. When the guided vehicle finishes traveling in the merging section 11 or 13, or leaves the specific zone 8, the guided vehicle deletes the data indicating occupancy in the RF tag 30 through the writing unit 31. A writer 42 writes data in the RF tag 22 of the guided vehicle. In particular, the writer 42 writes the current position determined by the position recognition unit 38 at predetermined time intervals.

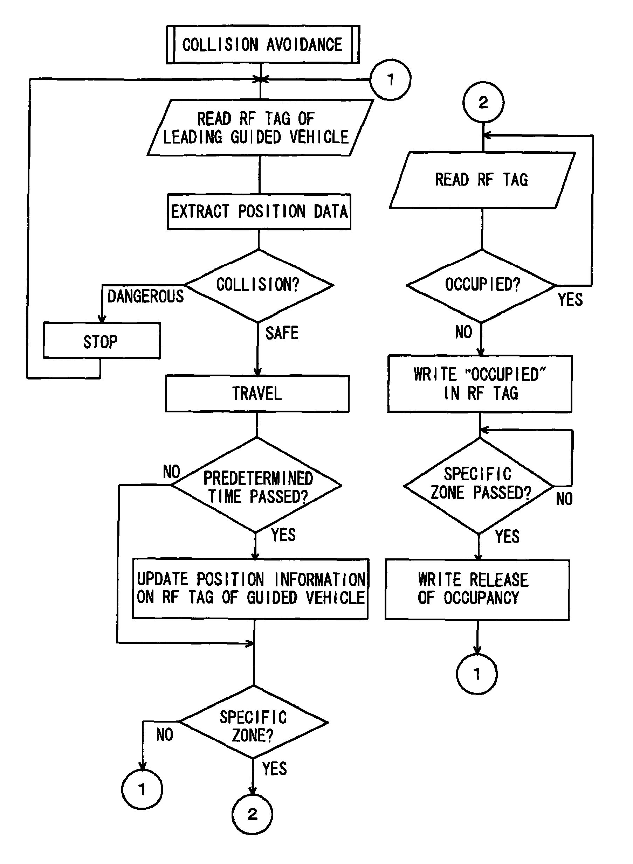

FIG. 3 shows a collision avoidance algorithm in the embodiment. The other algorithms such as algorithms for travel control, assignment of transportation commands, and transfer control are not directly related to the embodiment, and description thereof will be omitted. The guided vehicle reads the RF tag of the leading guided vehicle, extracts the position data, and determines the distance to the leading guided vehicle for collision avoidance. The position information of the RF tag of the guided vehicle is updated at predetermined time intervals. When the guided vehicle comes to a specific zone such as the merging section, at the entrance of the specific zone, the guided vehicle reads the RF tag, and checks whether the specific zone is occupied or not. If the specific zone is occupied, the guided vehicle waits until the occupancy is released. If the specific zone is not occupied, the guided vehicle enters the specific zone, and write data indicating that the specific zone will be occupied in the RF tag on the entrance side. After the guided vehicle passes the specific zone, the guided vehicle writes the data indicating the release of occupancy in the RF tag.

In the embodiment, the overhead traveling vehicle is taken as an example. Further, the present invention is applicable to communication between guided vehicles such as rail guided vehicles, automated guided vehicles, or a plurality of stacker cranes traveling along the same traveling rail. The purpose of communication is not limited to collision avoidance. For example, the leading guided vehicle may write data regarding status of the leading guided vehicle as the data which can be utilized by the following guided vehicle. In this case, for example, the status data includes the destination of the leading guided vehicle, or data indicating that the leading guided vehicle is traveling normally, traveling at low speed, or stopped due to a failure. Based on the data, the following guided vehicle can determine whether it is not necessary to change the traveling route. Further, information about abnormal positions in the traveling routes and traffic congestion information can be exchanged between the guided vehicles using the RF tags and the RF tag readers. Further, the guided vehicle may be capable of writing data in the RF tag of another guided vehicle conveniently. For example, in the case where the following guided vehicle is in the middle of preferential transportation, i.e., in the case where the following guided vehicle needs to be transported preferentially, the RF tag reader/writer of the following guided vehicle writes data indicating that the following guided vehicle is in the middle of preferential transportation, and data indicating the destination of the following guided vehicle in the RF tag of the leading guided vehicle. In this case, the RF tag reader/writer of the leading guided vehicle reads these items of data, and writes data indicating that the leading guided vehicle will move to the branch route when it becomes possible, in its RF tag for allowing the following guided vehicle to read the data. Then, leading guided vehicle moves to the branch route. In this manner, collision is avoided, and moreover, it is possible to implement generally autonomous travel control.

## Claims

1. A guided vehicle system including guided vehicles, wherein a guided vehicle having:
an RF tag reader reading at least one of an RF tag provided in a leading guided vehicle and an RF tag provided along a travel route; and
control means for controlling travel of the guided vehicle for avoiding a collision between the guided vehicle and the leading guided vehicle based on information read from the RF tag.

2. The guided vehicle system of claim 1, wherein each of the guided vehicles has an RF tag, and the RF tag reader reads the RF tag provided in the leading guided vehicle.

3. The guided vehicle system of claim 1, wherein the RF tag provided along the travel route is provided in a merging section of the travel route for writing information about whether the guided vehicle can enter the merging section in the RF tag, and the guided vehicle reads the RF tag provided in a merging section of the travel route with the RF tag reader before entering the merging section to determine whether the guided vehicle can enter the merging section.

4. The guided vehicle system of claim 2, wherein each of the guided vehicles has an RF tag writer, the guided vehicle writes position information of the guided vehicle in RF tag of the guided vehicle with the RF tag writer, and the guided vehicle reads the RF tag of the leading guided vehicle with the RF tag reader to avoid the collision with the control means.

5. The guided vehicle system of claim 4, wherein each of the guided vehicles has a map storing a traveling route, the tag writer writes information of a position on the traveling route as the position information, and the control means refers to the map for avoiding the collision.

6. The guided vehicle system of claim 3, wherein each of the guided vehicles has an RF tag writer, and a blocking signal for blocking the merging section against the other guided vehicles is written in the RF tag provided in the merging section with the RF tag writer.

7. The guided vehicle system of claim 6, further including releasing means for releasing the blocking signal in the RF tag provided in the merging section after a pass of the guided vehicle through the merging section.

8. The guided vehicle system of claim 7, wherein each of the guided vehicles has the releasing means.

9. The guided vehicle system of claim 7, wherein each of the guided vehicles has requesting means for requesting the release to the releasing means.
